# EUROPÄISCHE PATENTSCHRIFT

(11) **EP 2 801 494 B1**
(45) Veröffentlichungstag und Bekanntmachung des Hinweises auf die Patenterteilung: **02.08.2017**
(21) Anmeldenummer: 14164185.2
(22) Anmeldetag: 10.04.2014
(51) Int. Cl.: B60K 31/00, G05B 13/04

(54) **Verfahren zum Ermitteln eines Geschwindigkeitsverlaufs eines Kraftfahrzeugs**
Method for determining a speed curve of a motor vehicle
Procédé de détermination d'une courbe de vitesse d'un véhicule automobile

(30) Priorität: 03.05.2013 DE 102013208172
(43) Veröffentlichungstag der Anmeldung: 12.11.2014
(73) Patentinhaber: ROBERT BOSCH GMBH, 70442 Stuttgart (DE)
(72) Erfinder: Selem, Moez, 30625 Hannover (DE); Balkema, Jan Wietse, 31134 Hildesheim (DE)

(56) Entgegenhaltungen:
- DE-A1- 10 345 319

## Beschreibung

Die Erfindung betrifft ein Verfahren zum Ermitteln eines Geschwindigkeitsverlaufs eines Kraftfahrzeugs. Die Erfindung betrifft weiterhin eine vorausschauende Geschwindigkeitsregelvorrichtung für ein Kraftfahrzeug.

### Stand der Technik

Im Stand der Technik sind Verfahren beschrieben, die einen energiesparenden Betrieb im Straßenverkehr beabsichtigen und die, ausgehend von einem Steigungsprofil einer vorausliegenden Strecke, einen optimalen Geschwindigkeitsverlauf bzw. eine entsprechende Fahrstrategie ermitteln. Während das Fahrzeug fährt, wird die für die Position berechnete Geschwindigkeit entweder durch einen Geschwindigkeitsregler direkt eingestellt, oder es wird dem Fahrer ein Hinweis gegeben, damit dieser die Geschwindigkeit entsprechend anpasst.

Bekannt ist ein derartiges Verfahren beispielsweise aus "Rieker H.; Dorrer C., Grein F., Wiedemann J., "Informationen über die vorausliegenden Strecke als Basis für verbrauchsoptimierte Fahrstrategien, 3. Stuttgarter Symposium Kraftfahrwesen und Verbrennungsmotoren", Expertverlag Renningen, 1999, Seiten 716 ff.

Auch aus der gattungsbildenden DE 103 45 319 A1 ist ein derartiges Verfahren mit möglichen Auslegungen bekannt, insbesondere eine Art und Weise, wie die genannte Fahrstrategie berechnet wird.

Bekannt sind im Stand der Technik weiterhin Verfahren, die zur Berechnung eines optimalen Geschwindigkeitsprofils entweder eine Optimierung einer Kostenfunktion (z.B. Treibstoffverbrauch oder Energieeinsatz), gegebenenfalls unter Berücksichtigung von Nebenbedingungen (wie z.B. Fahrzeit), oder eine Auswahl definierter Regeln (regelbasierende Verfahren) anwenden.

### Offenbarung der Erfindung

Es besteht ein Bedürfnis nach einem verbesserten Verfahren zur Ermittlung eines Geschwindigkeitsverlaufs für ein Kraftfahrzeug.

Die Erfindung schafft gemäß einem ersten Aspekt ein Verfahren zum Ermitteln eines Geschwindigkeitsverlaufs eines Kraftfahrzeugs, aufweisend die Schritte:
a) Ermitteln eines Höhenprofils einer im Wesentlichen in äquidistante Abschnitte unterteilten vorausliegenden Fahrstrecke;
b) Beziehen des Höhenprofils auf einen definierten Referenzwert;
c) Zerlegen des Höhenprofils in einzelne Frequenzen mittels Fourieranalyse;
d) Durchführen von Phasenverschiebungen für die Frequenzen mittels einer ersten Funktion;
e) Beeinflussen von Amplituden der Frequenzen mittels einer zweiten Funktion; und
f) Ermitteln des Geschwindigkeitsverlaufs aus den in den Schritten d) und e) bearbeiteten Frequenzen mittels einer Fourier-Analyse, wobei eine Geschwindigkeit des Kraftfahrzeugs an einer Ausgangsposition als eine Wunschgeschwindigkeit angenommen wird.

Gemäß einem zweiten Aspekt wird mit der Erfindung eine Vorausschauende Geschwindigkeitsregelvorrichtung für ein Kraftfahrzeug vorgeschlagen, welche aufweist:
- eine Rechnereinrichtung, mittels der ein erfindungsgemäßes Verfahren durchführbar ist, wobei ein von der Rechnereinrichtung ermittelter Geschwindigkeitsverlauf an eine Geschwindigkeitsregeleinrichtung des Kraftfahrzeugs übermittelbar ist.

Bevorzugte Weiterbildungen der Erfindung sind Gegenstand von Unteransprüchen.

Eine vorteilhafte Weiterbildung des erfindungsgemäßen Verfahrens sieht vor, dass in Schritt c) eine diskrete Fouriertransformation oder eine Fast-Fourier-transformation durchgeführt wird. Auf diese Weise kann aus unterschiedlichen Berechnungsverfahren ausgewählt werden, wobei die diskrete Fouriertransformation vorteilhaft ein sehr genaues Verfahren und die Fast- Fouriertransformation vorteilhaft ein sehr effizientes Verfahren bereitstellt.

Eine weitere bevorzugte Ausführungsform des erfindungsgemäßen Verfahrens sieht vor, dass die erste Funktion und die zweite Funktion wenigstens eine der folgenden Größen berücksichtigt:
- Motoreigenschaften des Kraftfahrzeugs und/oder;
- Getriebeeigenschaften des Kraftfahrzeugs und/oder;
- Bauform des Kraftfahrzeugs und/oder;
- Aerodynamische Eigenschaften des Kraftfahrzeugs und/oder;
- Gewicht des Kraftfahrzeugs und/oder;
- Eingestellte Wunschgeschwindigkeit und/oder;
- Geschwindigkeit an der Ausgangsposition und/oder;
- Minimalgeschwindigkeit und/oder;
- Maximalgeschwindigkeit.

Auf diese Weise wird vorteilhaft dem Umstand Rechnung getragen, dass das konkrete System "Kraftfahrzeug" kein ideales System mit 100%-igem Wirkungsgrad darstellt. Aus diesem Grund werden im Verfahren verschiedene Größen bzw. Parameter berücksichtigt, mit denen die Phasenverschiebung bzw. die Amplituden der einzelnen Frequenzen beeinflusst werden können und damit eine möglichst getreue Modellierung des Systems "Kraftfahrzeug" erlauben.

Eine weitere bevorzugte Ausführungsform des erfindungsgemäßen Verfahrens sieht vor, dass in Schritt f) eine inverse diskrete Fouriertransformation oder eine inverse Fast-Fouriertransformation durchgeführt wird. Auf diese Weise wird ein dem Transformationsschritt entsprechender Rücktransformationsschritt in den Zeitbereich durchgeführt, wodurch eine effiziente Ermittlung des Geschwindigkeitsverlaufs unterstützt ist.

Eine weitere bevorzugte Ausführungsform des erfindungsgemäßen Verfahrens sieht vor, dass für das Kraftfahrzeug in Schritt f) eine angegebene Wunschgeschwindigkeit berücksichtigt wird, wobei die Wunschgeschwindigkeit in Schritt f) zum Geschwindigkeitsverlauf addiert wird. Auf diese Weise kann ein Offset berücksichtigt werden, der vorteilhaft ein möglichst gutes Anpassen der Wunschgeschwindigkeit an den ermittelten Geschwindigkeitsverlaufs ermöglicht.

Eine weitere bevorzugte Ausführungsform des erfindungsgemäßen Verfahrens sieht vor, dass die Fourieranalyse mittels einer elektronischen MP3-Schaltungseinrichtung durchgeführt wird. Vorteilhaft kann dadurch die Fourieranalyse mittels effizient arbeitender MP3-Schalteinrichtungen durchgeführt werden, was zudem den Vorteil hat, dass die genannten Schaltungseinrichtungen in vielen Kraftfahrzeugen bereits serienmäßig vorhanden sind. Vorteilhaft kann dadurch Einsparung von Prozessorrechenzeit erreicht werden.

Weitere bevorzugte Ausführungsformen des erfindungsgemäßen Verfahrens sehen einen Vorbearbeitungsschritt mittels einer Fensterfunktion und eine entsprechende Nachbearbeitung vor. Auf dieses Weise kann die gesamte Fahrstrecke in einzelne Abschnitte unterteilt werden, was einen Berechnungsaufwand vorteilhaft optimiert.

Eine bevorzugte Ausführungsform des erfindungsgemäßen Verfahrens sieht vor, dass ein Regeln der Geschwindigkeit des Kraftfahrzeugs auf den der aktuellen Position des Kraftfahrzeugs entsprechenden Wert des Geschwindigkeitsverlaufs durchgeführt wird. Auf diese Weise kann eine gute und energieschonende Anpassung der Geschwindigkeit des Kraftfahrzeugs an ein Geländeprofil erreicht werden.

Eine vorteilhafte Weiterbildung der erfindungsgemäßen Geschwindigkeitsregelvorrichtung zeichnet sich dadurch aus, dass die Rechnereinrichtung als eine elektronische MP3-Schaltungseinrichtung ausgebildet ist. Vorteilhaft kann dadurch die effiziente MP3-Schaltungseinrichtung zur Durchführung des erfindungsgemäßen Verfahrens genutzt werden, was auch den Vorteil hat, dass sie in den meisten Kraftfahrzeugen bereits serienmäßig vorhanden ist.

### Vorteile der Erfindung

Als vorteilhaft wird angesehen, dass mittels der Erfindung ein sehr effizientes Verfahren zum Ermitteln eines Geschwindigkeitsverlaufs für ein Kraftfahrzeug mit Geschwindigkeitsregelvorrichtung bereitgestellt wird.

Die Erfindung wird im Folgenden mit weiteren Merkmalen und Vorteilen anhand von mehreren Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren.

In den Figuren zeigt:
- Fig. 1: ein prinzipielles Ablaufdiagramm einer Ausführungsform des erfindungsgemäßen Verfahrens;
- Fig. 2: eine prinzipielle Darstellung eines Höhenprofils einer Fahrstrecke und eines dem Höhenprofil entsprechenden erfindungsgemäß ermittelten Geschwindigkeitsverlaufs; und
- Fig. 3: eine prinzipielle Darstellung einer Ausführungsform der erfindungsgemäßen vorausschauenden Geschwindigkeitsregelvorrichtung.

### Ausführungsformen der Erfindung

Die Erfindung stellt ein Verfahren zur Bestimmung eines, im Hinblick auf Treibstoffverbrauchswerte, optimierten Geschwindigkeitsverlaufs unter Berücksichtigung eines Höhenprofils einer vorausliegenden Fahrstrecke bereit. Dabei können gegebenenfalls diverse Fahrzeugparameter, wie zum Beispiel eine Motorkennlinie, eine Getriebeübersetzung, ein Gewicht, usw. sowie weitere spezifische Eigenschaften des Kraftfahrzeugs berücksichtigt werden.

Anders als bei bekannten Verfahren zur Berechnung eines optimalen Geschwindigkeitsverlaufs, die darauf basieren, dass Übergangskosten von jedem Zustand des fahrenden Fahrzeugs (beschrieben durch die Geschwindigkeit und die Position) zum nächsten Zustand des fahrenden Fahrzeugs berechnet werden und daraus eine minimale Summe aufeinanderfolgender Zustandsübergänge ermittelt wird ("modellprädiktive Verfahren"), basiert die vorliegende Erfindung auf einer spektralen Betrachtung des Höhenprofils der vorausliegenden Strecke. Die vorausliegende Fahrstrecke wird somit gewissermaßen als eine Signalgröße behandelt, welche, wie nachfolgend beschrieben, nach spezifischen Prinzipien bearbeitet wird.

Durch eine Änderung von Phasenlagen und Amplitudenwerten von Frequenzanteilen des betrachteten Höhenprofils wird ein Geschwindigkeitsprofil ermittelt, welches vorteilhaft ohne Anwendung einer expliziten Optimierungsfunktion einen Geschwindigkeitsverlauf bereitstellt, der eine treibstoffreduzierte Befahrung der betrachteten Strecke ermöglicht.

Dabei macht man sich das nachfolgend beschriebene Prinzip eines schwingenden Systems zu Nutze:

Würde eine reale Straße ein Höhen-/Steigungsprofil aufweisen, welches exakt einer Sinusschwingung entspricht und würde ein Kraftfahrzeug die genannte Straße befahren, so hätte das Fahrzeug nach bekannten physikalischen Prinzipien eine maximale potentielle Energie gespeichert, wenn es sich auf der Kuppe der Sinusschwingung ("Sinus-Berg") befindet und eine minimale potentielle Energie, wenn es sich in der Senke des "Sinus-Bergs" befindet.

Würde sich das genannte Fahrzeug physikalisch optimal bewegen, so würde man den Antriebsmotor des Fahrzeugs im optimalen Leistungsbereich (Bereich geringsten spezifischen Verbrauchs im Muscheldiagramm) antreiben und zusätzlich die Geschwindigkeit des Fahrzeugs variieren, so dass dadurch der Motor stets im optimalen Antriebsbereich bleibt. Dies bedeutet mit anderen Worten, dass das Fahrzeug in einer Aufwärtsphase auf den "Sinus-Berg" verlangsamt würde, d.h. seine kinetische Energie würde reduziert, wobei die potentielle Energie erhöht werden würde. In der Abwärtsbewegung vom "Sinus-Berg" in eine "Sinus-Senke" würde das Fahrzeug beschleunigt, weil die potentielle Energie auf der Kuppe in kinetische Energie bei der Anfahrt in der Senke umgewandelt wird. Das beschriebene Verhalten entspricht also einem schwingenden System, welches abwechselnd potentielle Energie in kinetische Energie umwandelt und umgekehrt.

In einem idealen reibungsfreien System wird dabei keinerlei Energie vernichtet, was letztlich bedeutet, dass der Geschwindigkeitsverlauf gegenüber dem Höhenprofil um 180° verschoben ist.

Nach dem geschilderten Prinzip kann die reale Fahrstrecke (Höhenprofil) vor dem Fahrzeug mittels einer Fourier-Transformation erfindungsgemäß in einzelne gleichförmige Schwingungen zerlegt bzw. transformiert werden. Man begibt sich somit in eine Frequenzdarstellung bzw. in einen Frequenzbereich/Frequenzraum des Höhenprofils Hp. Für jede der errechneten Schwingungen wird sodann die Schwingungsantwort (d.h. die Schwingungsvariation) des Fahrzeugs berechnet.

Bei einem idealen, verlustfreien und nicht angetriebenen schwingenden System entspricht dies einer Phasenverschiebung von 180° (d.h. Maximalgeschwindigkeit und minimale potentielle Energie in der Senke bzw. Minimalgeschwindigkeit und maximale potentielle Energie auf einer Kuppe einer harmonischen Schwingung).

Nach dieser Phasenverschiebung erfolgt eine Rücktransformation der einzelnen Schwingungen in den Zeitbereich, wodurch man als Resultat eine optimierte Geschwindigkeit über der Zeit bzw. über dem Ort erhält, welche mittels eines Geschwindigkeitsreglers automatisiert umgesetzt werden kann.

Um das Verfahren zu beeinflussen bzw. reale Annahmen einfließen zu lassen (zum Beispiel reales angetriebenes und verlustbehaftetes System) werden vorzugsweise im Frequenzbereich die Phase und die Amplitude beeinflusst. Die genannte Beeinflussung wird vorzugsweise in Abhängigkeit von konkreten Fahrzeugparametern vorgenommen werden.

Erfindungsgemäß ist vorgesehen, dass ein Verfahren zum Ermitteln eines Geschwindigkeitsverlaufs eines Kraftfahrzeugs bereitgestellt wird, welches sich dadurch auszeichnet, dass ein im Kraftfahrzeug mitgeführtes System Informationen über Steigung und/oder Höhe der vorausliegenden, voraussichtlich zu befahrenen Strecke Svoraus ermitteln oder auslesen kann und diese Informationen zum Ermitteln eines bevorstehenden Geschwindigkeitsverlaufs Vg über die vorausliegende Strecke Svoraus heranzieht. Dabei befindet sich der bevorzugte Geschwindigkeitsverlauf möglichst innerhalb eines definierten Geschwindigkeitskorridors, der eine minimale Geschwindigkeit vmin und eine maximale Geschwindigkeit vmax umfasst und eine bevorzugte Wunschgeschwindigkeit vw aufweist.

Das Ermitteln des bevorzugten Geschwindigkeitsverlaufs Vg umfasst die folgenden Schritte:

Einer digitalen Karte werden Steigungen und Höhenwerte entnommen, wobei anhand von konkreten Positionsdaten und einer Fahrstreckenhistorie ein elektronischer Horizont, das heißt eine wahrscheinlichste vorausliegende Fahrstrecke Svoraus ermittelt wird. Die wahrscheinlichste vorausliegende Fahrstrecke Svoraus kann auch einem in Fahrtrichtung vor dem Fahrzeug liegenden Anteil einer von einem Fahrzeugnavigationssystem zu einem Zielort bestimmten Route entsprechen. Die vorausliegende Fahrstrecke Svoraus wird in äquidistante Abschnitte (beispielsweise zu jeweils 100m) unterteilt, der die genannten Höhenwerte zugewiesen werden. Auf diese Weise wird ein Höhenprofil Hp der vorausliegenden Strecke Svoraus gewissermaßen "abgetastet".

Von den einzelnen Höhenwerten wird nunmehr ein Höhenwert an einer Ausgangsposition Pa subtrahiert, um auf diese Weise ein definiertes Referenz-Höhenniveau bereitzustellen.

Es werden nunmehr aus diesem Höhenprofil Hp einzelne Frequenzen Fi und deren Amplituden Ai bestimmt, aus denen der Höhenverlauf auf der vorausliegenden Strecke Svoraus mit hinreichender Genauigkeit ermittelt werden kann. Zu diesem Zweck können beispielsweise Verfahren der Fourieranalyse, wie zum Beispiel die diskrete Fouriertransformation DFT angewendet werden. Vorzugsweise wird dazu die Fast- Fourier-Transformation FFT angewendet, weil diese weniger Rechenleistung benötigt und die Aufgabe mit hinreichender Genauigkeit ausführen kann. Im Ergebnis wird also das genannte Höhenprofil Hp durch die Summe der einzelnen Frequenzen Fi repräsentiert.

Die einzelnen Frequenzen Fi werden nunmehr mithilfe einer definierten Funktion FPhase mit Phasenverschiebungen Ji versehen. Im Idealfall würden die genannten Phasenverschiebungen - wie oben beschrieben - jeweils 180° betragen, wobei jedoch aufgrund von Randbedingungen des konkreten Systems die Phasenverschiebungen geringer ausfallen.

Für die einzelnen Frequenzen Fi werden zudem, ausgehend von den Amplituden Ai, mittels einer definierten Funktion FAmplitude neue Amplituden Ain berechnet, die den Amplituden Ai vollständig oder teilweise entsprechen können, in Abhängigkeit von konkreten Randbedingungen des Systems.

Dabei können in die Funktionen FPhase und FAmplitude wenigstens eine der folgend aufgelisteten Kenngrößen einfließen:
- Eigenschaften des Motors des Kraftfahrzeugs und/oder;
- Eigenschaften des Getriebes des Kraftfahrzeugs und/oder;
- eine Bauform des Kraftfahrzeugs und/oder;
- aerodynamische Eigenschaften des Kraftfahrzeugs und/oder;
- Gewicht des Kraftfahrzeugs und/oder;
- eine eingestellte Wunschgeschwindigkeit vw des Kraftfahrzeugs und/oder;
- eine Geschwindigkeit an der Ausgangsposition Pa und/oder;
- eine Minimalgeschwindigkeit vmin des Kraftfahrzeugs und/oder;
- eine maximale Geschwindigkeit vmax des Kraftfahrzeugs.

Eine Beeinflussung der Amplituden Ai und der einzelnen Frequenzen Fi kann dabei mit denselben oder mit unterschiedlichen der genannten Kenngrößen vorgenommen wird.

Aufgrund der Bearbeitung mit den Funktionen FPhase und FAmplitude betragen Phasenverschiebungen Ji der einzelnen Frequenzen in der Regel weniger als 180°, wobei auch die neuen Amplitudenwerte Ain in der Regel von den Amplitudenwerten Ai abweichen. Im Ergebnis werden also mittels Verfahren der Fourieranalyse eine Phasenverschiebung und eine Amplitudenbeeinflussung der einzelnen Frequenzen Fi durchgeführt.

Für den Fall, dass keine Wunschgeschwindigkeit vw einer Geschwindigkeitsregelvorrichtung definiert bzw. durch den Fahrer eingegeben ist, wird die Geschwindigkeit des Kraftfahrzeugs an der jeweiligen Ausgangsposition Pa als Wunschgeschwindigkeit vw angenommen, solange bis der Fahrer eine Wunschgeschwindigkeit vw eingibt oder das System angehalten wird.

Aus den mit den Phasenverschiebungen Ji verschobenen und mit den neuen Amplituden Ain versehenen Frequenzen Fi wird nunmehr ein Verlauf ein Geschwindigkeitsverlauf Vg ermittelt bzw. rekonstruiert. Für die genannte Ermittlung des Geschwindigkeitsverlaufs Vg aus den besagten einzelnen Frequenzen Fi mit den Phasenverschiebungen Ji und Amplituden Ain werden vorzugsweise wiederum Verfahren der Fourieranalyse, wie beispielsweise die inverse diskrete Fouriertransformation IDFT angewendet. Vorzugsweise wird die inverse Fast-Fouriertransformation IFFT angewendet, weil sie weniger Rechenaufwand als die IDFT erfordert und die genannten Aufgaben mit hinreichender Genauigkeit erfüllen kann.

Falls vorhanden, wird zum ermittelten Geschwindigkeitsverlauf Vg der Beitrag der Wunschgeschwindigkeit vw addiert, wodurch sich der Geschwindigkeitsverlauf Vg um den Betrag der Wunschgeschwindigkeit vw verschiebt.

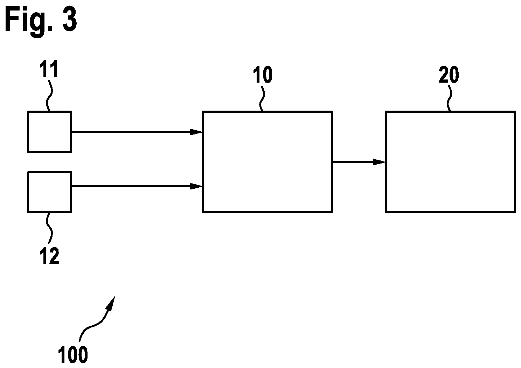

Während das Kraftfahrzeug die vorausliegende Strecke Svoraus befährt, wird die Geschwindigkeit mittels einer Geschwindigkeitsregelvorrichtung 100 (siehe Fig. 3) auf den der aktuellen Position des Kraftfahrzeugs entsprechenden Wert des Geschwindigkeitsverlaufs Vg geregelt.

Als ein optionaler Vorbearbeitungsschritt wird eine Fensterfunktion (beispielsweise eine Henning-, Hann- oder Turnkey-Fensterfunktion) als Vorbearbeitungsschritt angewendet, um eine gewisse Vorauswahl an äquidistanten Abschnitten der Gesamtstrecke zu erhalten. Die genannte Fensterfunktion sorgt dafür, dass immer nur kleine Abschnitte eines Gesamtverlaufs betrachtet werden, wodurch man einen fließenden Übergang zwischen den einzelnen Abschnitten hat.

In Entsprechung dazu ist auch noch ein Nachbearbeitungsschritt möglich, der nach der genannten Vorbearbeitung ausgeführt wird. Mittels der Nachbearbeitung können vorteilhaft Diskretisierungseffekte und Verformungen, die infolge der Fensterfunktion aufgetreten sind, ausgeglichen werden.

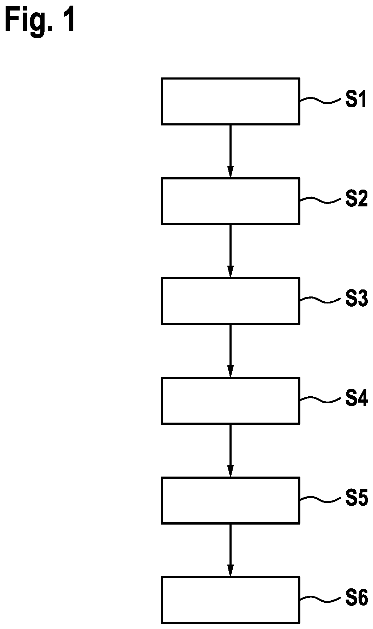

Fig. 1 zeigt einen prinzipiellen Ablauf einer Ausführungsform des erfindungsgemäßen Verfahrens, wobei die einzelnen Verfahrensschritte S1 bis S6 im Wesentlichen den oben beschriebenen Schritten entsprechen.

In einem ersten Schritt S1 wird ein Ermitteln eines Höhenprofils Hp einer im Wesentlichen in äquidistante Abschnitte unterteilten vorausliegenden Fahrstrecke Svoraus durchgeführt.

In einem zweiten Schritt S2 wird ein Höhenprofil Hp auf einen definierten Referenzwert bezogen.

In einem dritten Schritt S3 wird das Höhenprofil Hp mittels Fourieranalyse in einzelne Frequenzen Fi zerlegt.

In einem vierten Schritt S4 werden Phasenverschiebungen Ji für die Frequenzen Fi mittels einer ersten Funktion FPhase durchgeführt.

In einem fünften Schritt S5 werden Amplituden Ai der Frequenzen Fi mittels einer zweiten Funktion FAmplitude beeinflusst.

Schließlich wird in einem sechsten Schritt S6 ein Geschwindigkeitsverlauf Vg aus den in den Schritten S4 und S5 bearbeiteten Frequenzen Fi mittels einer Fourier-Analyse ermittelt, wobei eine Geschwindigkeit des Kraftfahrzeugs an einer Ausgangsposition Pa als eine Wunschgeschwindigkeit vw angenommen wird.

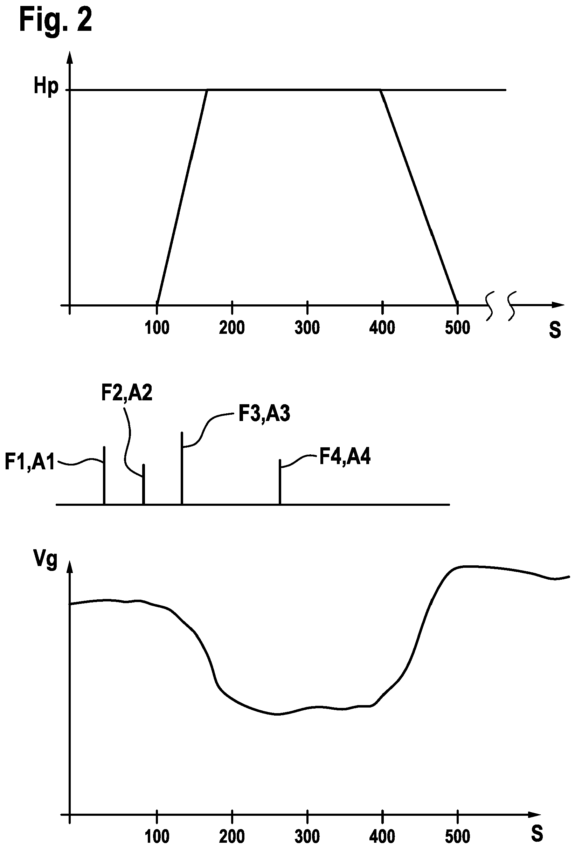

Fig. 2 zeigt prinzipiell und beispielhaft eine Wirkungsweise des erfindungsgemäßen Verfahrens. In einer oberen Darstellung ist ein Höhenprofil Hp über einem Streckenverlauf s dargestellt, wobei ein betrachteter Streckenabschnitt in äquidistante Abschnitte zu jeweils 100m aufgeteilt ist.

In der mittleren Darstellung von Fig. 2 ist rein qualitativ eine Zerlegung der einzelnen Frequenzanteile des Höhenprofils Hp in einzelne Frequenzen F1 bis F4 dargestellt. Man erkennt, dass den einzelnen Frequenzen F1...F4 jeweils einzelne Amplitudenwerte A1...A4 zugeordnet sind.

In einer unteren Darstellung von Fig. 2 ist ein dem Höhenprofil Hp entsprechender Geschwindigkeitsverlauf Vg, der erfindungsgemäß ermittelt wurde, dargestellt. Man erkennt, dass im Bereich von ungefähr 100 m die Geschwindigkeit vergleichsweise hoch ist, was vorteilhaft bedeutet, dass diese hohe Geschwindigkeit ausgenützt wird, um die nachfolgende Steigung unter geringstmöglichem Treibstoffverbrauch möglichst vollständig abzufahren, um dadurch eine Kuppe des Höhenprofils Hp mit minimaler Geschwindigkeit zu erreichen.

Es muss somit keine Energie verschwendet werden, um die Anhöhe der Kuppe zu erreichen. Nunmehr wird die Tatsache ausgenutzt, dass auf der folgenden Abwärtsstrecke kinetische Energie des Kraftfahrzeugs in potenzielle Energie umgesetzt wird, wodurch sich die Geschwindigkeit des Kraftfahrzeugs erhöht. Vorzugsweise wird dabei keinerlei Bremsung mit entsprechendem Bremsverschleiß benötigt, so dass im Ergebnis ein an das entsprechende Höhenprofil Hp optimal angepasster Geschwindigkeitsverlauf Vg realisiert wird.

Die Ergebnisse des erfindungsgemäß ermittelten Geschwindigkeitsverlaufs Vg können fahrzeugintern an eine Geschwindigkeitsregelanlage (z.B. Tempomat) weitergeleitet werden, der mit diesen Informationen eine Geschwindigkeit des Kraftfahrzeugs bestmöglich an das vorausliegende Höhenprofil Hp anpasst.

Fig. 3 zeigt ein prinzipielles Blockschaltbild einer Ausführungsform einer erfindungsgemäßen vorausschauenden Geschwindigkeitsregelvorrichtung 100. Die Geschwindigkeitsregelvorrichtung 100 umfasst eine Rechnereinrichtung 10 (z.B. in Form von elektronischen MP3-Schaltkreisen), der Informationen einer digitalen Karte 11 und Positionsdaten einer Positionserfassungseinrichtung 12 (beispielsweise ein GPS-System) zugeführt werden.

Gemäß den oben geschilderten Prinzipien wird mittels der Rechnereinrichtung 10 aus einem vorausliegenden Streckenprofil ein Geschwindigkeitsverlauf Vg errechnet, der einer Geschwindigkeitsregeleinrichtung 20 des Kraftfahrzeugs zugeführt wird. Mittels der Geschwindigkeitsregelvorrichtung 100 wird also die Geschwindigkeit des Kraftfahrzeugs entsprechend dem vorausliegenden Höhenprofil Hp und dem ermittelten Geschwindigkeitsverlauf Vg in energieeffizienter und ressourcenschonender Weise geregelt.

Vorteilhaft kann aufgrund der Berechnungen der Fourieranalyse mittels der MP3-Schaltkreise ein hardwaretechnischer Schaltungsaufwand minimiert werden, da die genannten Schaltkreise in der Regel in den meisten Kraftfahrzeugen bereits serienmäßig vorhanden sind.

Zusammenfassend wird mit der vorliegenden Erfindung ein Verfahren zu einer Berechnung eines Geschwindigkeitsverlaufs vorgeschlagen, der an ein vorausliegendes Streckenprofil angepasst ist.

Das erfindungsgemäße Verfahren zeichnet sich gegenüber vielen im Stand der Technik beschriebenen Verfahren vor allem durch die deutlich geringere Anzahl an erforderlichen Rechenschritten aus. Das erfindungsgemäße Verfahren nutzt Daten einer digitalen Straßenkarte, in denen üblicherweise Steigungs- bzw. Höhenwerte gespeichert sind. Der erfindungsgemäß ermittelte Geschwindigkeitsverlauf für optimierten Kraftstoffverbrauch hängt somit zu wesentlichen Teilen von der befahrenen Strecke ab, wobei getrachtet wird, auf die Anfahrten der Steigungen so viel Geschwindigkeit wie möglich mitzunehmen.

Obwohl die vorliegende Erfindung anhand von bevorzugten Ausführungsformen beschrieben worden ist, ist sie keineswegs darauf beschränkt.

Der Fachmann wird somit die Merkmale entsprechend abzuändern und kombinieren, ohne vom Kern der Erfindung abzuweichen.

## Patentansprüche

1. Verfahren zum Ermitteln eines Geschwindigkeitsverlaufs (Vg) eines Kraftfahrzeugs, aufweisend die Schritte:
a) Ermitteln eines Höhenprofils (Hp) einer im Wesentlichen in äquidistante Abschnitte unterteilten vorausliegenden Fahrstrecke (Svoraus); und
b) Beziehen des Höhenprofils (Hp) auf einen definierten Referenzwert; dieses Verfahren ist durch die weitere Schritte gekennzeichnet:
c) Zerlegen des Höhenprofils (Hp) in einzelne Frequenzen (Fi) mittels Fourieranalyse;
d) Durchführen von Phasenverschiebungen (Ji) für die Frequenzen (Fi) mittels einer ersten Funktion (FPhase);
e) Beeinflussen von Amplituden (Ai) der Frequenzen (Fi) mittels einer zweiten Funktion (FAmplitude); und
f) Ermitteln des Geschwindigkeitsverlaufs (Vg) aus den in den Schritten d) und e) bearbeiteten Frequenzen (Fi) mittels einer Fourier-Analyse, wobei eine Geschwindigkeit des Kraftfahrzeugs an einer Ausgangsposition (Pa) als eine Wunschgeschwindigkeit (vw) angenommen wird.

2. Verfahren nach Anspruch 1, wobei in Schritt c) eine diskrete Fourier-transformation oder eine Fast-Fouriertransformation durchgeführt wird.

3. Verfahren nach Anspruch 1 oder 2, wobei die erste Funktion (FPhase) und die zweite Funktion (FAmplitude) wenigstens eine der folgenden Größen berücksichtigt:
- Motoreigenschaften des Kraftfahrzeugs und/oder;
- Getriebeeigenschaften des Kraftfahrzeugs und/oder;
- Bauform des Kraftfahrzeugs und/oder;
- Aerodynamische Eigenschaften des Kraftfahrzeugs und/oder;
- Gewicht des Kraftfahrzeugs und/oder;
- Eingestellte Wunschgeschwindigkeit (v_{w}) und/oder;
- Geschwindigkeit an der Ausgangsposition Pa und/oder;
- Minimalgeschwindigkeit (vmin) und/oder;
- Maximalgeschwindigkeit (vmax).

4. Verfahren nach einem der Ansprüche 1 bis 3, wobei in Schritt f) eine inverse diskrete Fouriertransformation oder eine inverse Fast- Fouriertransformation durchgeführt wird.

5. Verfahren nach einem der vorhergehenden Ansprüche, wobei für das Kraftfahrzeug in Schritt f) eine angegebene Wunschgeschwindigkeit (vw) berücksichtigt wird, wobei die Wunschgeschwindigkeit in Schritt f) zum Geschwindigkeitsverlauf (Vg) addiert wird.

6. Verfahren nach einem der vorhergehenden Ansprüche, wobei die Fourier-analyse mittels einer elektronischen MP3-Schaltungseinrichtung durchgeführt wird.

7. Verfahren nach einem der vorhergehenden Ansprüche, wobei in einem Vorbearbeitungsschritt eine Fensterfunktion auf die vorausliegende Strecke angewendet wird.

8. Verfahren nach Anspruch 7, wobei die Fensterfunktion eine aus der folgenden Gruppe ist: Henning- , Hann- oder Turnkey-Fensterfunktion.

9. Verfahren nach Anspruch 7 oder 8, wobei eine Nachbereitung durchgeführt wird, die Diskretisierungseffekte und/oder Verformungen infolge der Fensterfunktion ausgleicht.

10. Verfahren nach einem der vorhergehenden Ansprüche, wobei ein Regeln der Geschwindigkeit des Kraftfahrzeugs auf den einer aktuellen Position des Kraftfahrzeugs entsprechenden Wert des Geschwindigkeitsverlaufs (Vg) durchgeführt wird.

11. Vorausschauende Geschwindigkeitsregelvorrichtung (100) für ein Kraftfahrzeug, aufweisend:
- eine Rechnereinrichtung (10), mittels der ein Verfahren nach einem der Ansprüche 1 bis 10 durchgeführt wird;
- wobei ein von der Rechnereinrichtung (10) ermittelter Geschwindigkeitsverlauf (Vg) an eine Geschwindigkeitsregeleinrichtung (20) des Kraftfahrzeugs übermittelt wird.

12. Geschwindigkeitsregelvorrichtung (100) nach Anspruch 11, wobei die Rechnereinrichtung (10) als eine elektronische MP3-Schaltungseinrichtung ausgebildet ist.

13. Computerprogrammprodukt mit Programmcodemitteln zur Durchführung des Verfahrens nach einem der Ansprüche 1 bis 10, wenn es auf einer elektronischen Rechnereinrichtung (10) abläuft oder auf einem computerlesbaren Datenträger gespeichert ist.

## Claims

1. Method for determining a speed profile (Vg) of a motor vehicle, comprising the steps:
a) determining an altitude profile (Hp) of a route (Svoraus) which lies ahead and is essentially divided into equidistant sections;
b) relating the altitude profile (Hp) to a defined reference value;
this method is **characterized by** the further steps:
c) breaking up the altitude profile (Hp) into individual frequencies (Fi) by means of Fourier analysis;
d) executing phase shifts (Ji) for the frequencies (Fi) by means of a first function (FPhase);
e) influencing amplitudes (Ai) of the frequencies (Fi) by means of a second function (FAmplitude); and
f) determining the speed profile (Vg) from the frequencies (Fi) processed in the steps d) and e), by means of a Fourier analysis, wherein a speed of the motor vehicle at a starting position (Pa) is assumed to be a desired speed (vw).

2. Method according to Claim 1, wherein in step c) a discrete Fourier transformation or a fast Fourier transformation is carried out.

3. Method according to Claim 1 or 2, wherein the first function (FPhase) and the second function (FAmplitude) take into account at least one of the following variables:
- engine properties of the motor vehicle and/or;
- gearbox properties of the motor vehicle and/or;
- design of the motor vehicle and/or;
- aerodynamic properties of the motor vehicle and/or;
- weight of the motor vehicle and/or;
- desired speed (v_{w}) which has been set, and/or;
- speed at the starting position Pa and/or;
- minimum speed (vmin) and/or;
- maximum speed (vmax).

4. Method according to one of Claims 1 to 3, wherein in step f) an inverse discrete Fourier transformation or an inverse fast Fourier transformation is carried out.

5. Method according to one of the preceding claims, wherein a specified desired speed (vw) is taken into account for the motor vehicle in step f), wherein the desired speed is added to the speed profile (Vg) in step f).

6. Method according to one of the preceding claims, wherein the Fourier analysis is carried out by means of an electronic MP3 circuit device.

7. Method according to one of the preceding claims, wherein in a pre-processing step a window function is applied to the section of route lying ahead.

8. Method according to Claim 7, wherein the window function is one of the following group: Henning function, Hann function or Turnkey function.

9. Method according to Claim 7 or 8, wherein post-processing is carried out which compensates discretization effects and/or deformations owing to the window function.

10. Method according to one of the preceding claims, wherein the speed of the motor vehicle is adjusted to the value of the speed profile (Vg) which corresponds to a current position of the motor vehicle.

11. Predictive cruise controller (100) for a motor vehicle, comprising:
- a computer device (10) by means of which a method according to one of Claims 1 to 10 is carried out;
- wherein a speed profile (Vg) which is determined by the computer device (10) is transmitted to a cruise controller (20) of the motor vehicle.

12. Cruise controller (100) according to Claim 11, wherein the computer device (10) is embodied as an electronic MP3 circuit device.

13. Computer program product having program code means for carrying out the method according to one of Claims 1 to 10 when said computer program product runs on an electronic computer device (10) or is stored on a computer-readable data carrier.

## Revendications

1. Procédé pour déterminer une courbe de vitesse (Vg) d'un véhicule automobile, comportant les étapes consistant à :
a) déterminer un profil de hauteur (Hp) d'un parcours situé à l'avant (Svoraus) -divisé en tronçons sensiblement équidistants ; et
b) rapporter le profil de hauteur (Hp) à une valeur de référence définie ; ledit procédé étant **caractérisé par** les autres étapes consistant à :
c) décomposer le profil de hauteur (Hp) en des fréquences individuelles (Fi) au moyen d'une analyse de Fourier ;
d) effectuer des décalages de phase (Ji) des fréquences (Fi) au moyen d'une première fonction (FPhase) ;
e) agir sur les amplitudes (Ai) des fréquences (Fi) au moyen d'une deuxième fonction (FAmplitude) ; et
f) déterminer la courbe de vitesse (Vg) à partir des fréquences (Fi) traitées lors des étapes d) et e) au moyen d'une analyse de Fourier, dans lequel une vitesse du véhicule automobile à une position de départ (Pa) est utilisée en tant que vitesse souhaitée (vw).

2. Procédé selon la revendication 1, dans lequel une transformation de Fourier discrète ou une transformation de Fourier rapide est effectuée lors de l'étape c).

3. Procédé selon la revendication 1 ou 2, dans lequel la première fonction (FPhase) et la deuxième fonction (FAmplitude) prend en compte au moins l'une des grandeurs suivantes :
- des propriétés du moteur du véhicule automobile et/ou ;
- des propriétés de la transmission du véhicule automobile et/ou ;
- la structure du véhicule automobile et/ou ;
- les propriétés aérodynamiques du véhicule automobile et/ou ;
- le poids du véhicule automobile et/ou ;
- la vitesse souhaitée réglée (v_{w}) et/ou ;
- la vitesse à la position de départ Pa et/ou ;
- la vitesse minimale (vmin) et/ou ;
- la vitesse maximale (vmax).

4. Procédé selon l'une quelconque des revendications 1 à 3, dans lequel une transformation de Fourier discrète inverse ou une transformation de Fourier rapide inverse est effectuée lors de l'étape f).

5. Procédé selon l'une quelconque des revendications précédentes, dans lequel une vitesse souhaitée spécifiée (vw) est prise en compte pour le véhicule automobile lors de l'étape f), dans lequel la vitesse souhaitée est additionnée à la courbe de vitesse (Vg) lors de l'étape f).

6. Procédé selon l'une quelconque des revendications précédentes, dans lequel l'analyse de Fourier est effectuée au moyen d'une moyen à circuit MP3 électronique.

7. Procédé selon l'une quelconque des revendications précédentes, dans lequel une fonction de fenêtre est appliquée au parcours situé à l'avant lors d'une étape de prétraitement.

8. Procédé selon la revendication 7, dans lequel la fonction de fenêtre est un groupe comprenant : les fonctions de fenêtre de Henning, Hann ou Turnkey.

9. Procédé selon la revendication 7 ou 8, dans lequel un post-traitement est effectué pour compenser les effets de la discrétisation et/ou les déformations résultant de la fonction de fenêtre.

10. Procédé selon l'une quelconque des revendications précédentes, dans lequel un réglage de la vitesse du véhicule automobile est effectuée à une valeur correspondant à une position actuelle du véhicule automobile de la courbe de vitesse (Vg).

11. Dispositif de régulation anticipée de la vitesse (100) destiné à un véhicule automobile, comportant :
- un dispositif de calcul (10) au moyen duquel un procédé selon l'une quelconque des revendications 1 à 10 est mis en oeuvre ;
- dans lequel une courbe de vitesse (Vg) déterminée par le dispositif de calcul (10) est transmise à un dispositif de régulation de vitesse (20) du véhicule automobile.

12. Dispositif de régulation de vitesse (100) selon la revendication 11, dans lequel le dispositif de calcul (10) est réalisé sous la forme d'un moyen à circuit MP3 électronique.

13. Produit de programme d'ordinateur comportant des moyens à codes de programmes pour la mise en oeuvre du procédé selon l'une quelconque des revendications 1 à 10 lorsqu'il est exécuté sur une dispositif électronique de calcul (10) ou est stocké sur un support de données lisible par ordinateur.
